# EUROPÄISCHE PATENTANMELDUNG

(11) **EP 2 607 316 A1**
(43) Veröffentlichungstag der Anmeldung: **26.06.2013**
(21) Anmeldenummer: 11195683.5
(22) Anmeldetag: 23.12.2011
(51) Int. Cl.: C01D 15/00, C01B 25/455, H01M 10/0568

(54) **LiPF6-Lösungen**

(71) Anmelder: LANXESS Deutschland GmbH, 51369 Leverkusen (DE)
(72) Erfinder: Boll, Matthias, 51061 Köln (DE); Ebenbeck, Wolfgang, 51373 Leverkusen (DE); Kuckert, Eberhard, 51375 Leverkusen (DE)

(57) **Zusammenfassung**

Die vorliegende Erfindung betrifft korrosionsarme, halogenidarme LiPF₆-Lösungen in Acetonitril sowie deren Verwendung in elektrochemischen Speichervorrichtungen und ein Verfahren zur Herstellung derselben.

## Beschreibung

Die vorliegende Erfindung betrifft LiPF₆-Lösungen in Acetonitril sowie deren Verwendung in elektrochemischen Speichervorrichtungen und ein Verfahren zur Herstellung derselben.

Die Verbreitung von tragbaren elektronischen Geräten, wie z.B. Laptop und Palmtop-Computern, Mobiltelefonen oder Videokameras und damit auch der Bedarf nach leichten und leistungsfähigen Batterien hat in den letzten Jahren weltweit dramatisch zugenommen. Hinzu kommt die Ausrüstung von Elektrofahrzeugen mit derartigen Batterien.

Angesichts dieses sprunghaft gestiegenen Bedarfs nach Batterien und den damit verbundenen ökologischen Problemen kommt der Entwicklung von wieder aufladbaren Batterien mit einer langen Lebensdauer eine stetig wachsende Bedeutung zu.

Seit den frühen neunziger Jahren werden wieder aufladbare Lithiumionenbatterien (eigentlich: Lithiumionenakkumulatoren) kommerziell angeboten. Die meisten dieser Akkumulatoren arbeiten mit Lithiumhexafluorophosphat als Leitsalz. Dieses Lithiumsalz stellt jedoch eine extrem hydrolyseempfindliche Verbindung mit einer geringen thermischen Stabilität dar, so dass die entsprechenden Lithiumionenakkumulatoren aufgrund dieser Eigenschaften des Salzes nur durch sehr aufwändige und somit auch sehr kostenintensive Verfahren hergestellt werden können. Die entstehenden Hydrolyseprodukte des Lithiumhexafluorophosphat, wie etwa freies Fluorid, zeigen vor allem in Gegenwart von Wasser eine hohe Korrosivität gegenüber einigen im Akkumulator enthaltenen Bauteilen wie etwa der Anode und der Kathode.

Diese Empfindlichkeit gegen Wasser und die daraus entstehenden Zersetzungsprodukte mindern die Lebensdauer sowie die Leistung von Lithiumionenakkumulatoren und beeinträchtigen auch deren Einsatz unter extremen Bedingungen, wie z.B. hohen Temperaturen.

Stellt man LiPF₆ her, fällt dieses in heute gängigen großtechnischen Prozessen zwangsläufig zusammen mit Halogeniden, insbesondere Fluoriden an, die bzw. das sich störend im Hinblick auf die Effizienz und Lebensdauer einer elektrochemischen Speichervorrichtung auswirken können bzw. kann.

Daher werden in der Literatur verschiedene Lösungsvorschläge für die Verringerung des HF-, respektive Fluorid-Gehaltes in LiPF₆ angeboten.

In CN 102009972A werden HF-Anteile aus einem LiPF₆-Kristallisat mittels eines Stickstoffstroms entfernt.

In JP 09-268 005 wird reaktionsbedingt entstandenes HF durch Entgasen der erhaltenen LIPF₆ - Lösung unter Kühlung entfernt.

DE 198 05 356 C1 beschreibt die Herstellung von reinem LiPF₆ aus LiF und PCl₅ in Diethylether, bei dem eine Suspension von LiF in Diethylether angesäuert und anschließend mit PCl₅ umgesetzt wird. Diese Mischung wird nach erfolgter Umsetzung neutralisiert, filtriert und entweder zur Trockene eingedampft, oder LiPF₆ wird mit Hilfe eines Kristallisationshilfsmittels auskristallisiert.

Anfallendes LiPF₆-Etherat wird dann in Methylcyclohexan gelöst und unter einem Druck von 800 mbar eingeengt. Man erhielt ein Kristallisat mit einem Chloridgehalt von 70 ppm. In weiteren Versuchen erzielte man Chloridgehalte von < 20 ppm.

Nachteilig an dem oben zitierten Stand der Technik ist die Tatsache, dass entweder der Halogenid-Gehalt, insbesondere der Fluoridgehalt nicht niedrig genug war oder mit Chlorid sogar zusätzliche unerwünschte Halogenide prozessbedingt eingeführt wurden, was die Korrosivität von LiPF₆-Lösungen und damit zu befüllender elektrochemischer Speichervorrichtungen negativ beeinflusst.

Desweiteren wird zum Beispiel in WO02/28500 A1 vorgeschlagen, die LiPF6-haltige Lösung mit einem Alkalimetallhydrid zur Entfernung von Wasser und anderen protischen Verunreinigungen reagieren zu lassen. Nachteilig ist hierbei, dass das vorgeschlagene LiH schwer handhabbar und vergleichsweise teuer ist, vor allem aber, dass die Reaktionszeiten sehr lang sind.

Die Aufgabe der vorliegenden Erfindung bestand daher in der Bereitstellung nicht-korrosiver halogenidarmer LiPF₆-Lösungen in einem organischen Lösungsmittel zwecks Einsatz in elektrochemischen Speichervorrichtungen.

Die Lösung der Aufgabe und somit Gegenstand der vorliegenden Erfindung ist die Herstellung einer nicht-korrosiven/korrosionsarmen, halogenidarmen LiPF₆-Lösung, erhältlich durch Behandlung einer nichtwässrigen, halogenidhaltigen LiPF₆-Lösung mit wenigstens Natriumhydrid oder Natriummetall als Additiv, bevorzugt Natriumhydrid, wobei das LiPF₆ in Acetonitril als Lösungsmittel gelöst ist.

Überraschenderweise gelingt es, LiPF₆-Lösungen in Acetonitril mit einem Gesamtgehalt an Fluorid von weniger als 2 ppm herzustellen, deren Korrosionswirkung in einem Lithiumionenakkumulator auch über einen längeren Zeitraum hinweg vernachlässigbar ist.

Zur Klarstellung sei angemerkt, dass im Rahmen der vorliegenden Erfindung mit "Gehalt an Fluorid" der Gehalt gelöster Fluorid-Ionen als auch als LiF gebundenes Fluorid bezeichnet wird. Entsprechend bedeutet "halogenidarm" im Sinne der vorliegenden Erfindung, dass der Gehalt gelöster und/oder ungelöster Fluorid-Ionen in der LiPF₆-Lösung kleiner 2 ppm ist.. Nicht-korrosiv im Sinne der vorliegenden Erfindung bedeutet, dass die Lösung einen Gesamtfluoridgehalt von < 2 ppm aufweist. Dem Fachmann ist bekannt, dass die Anwesenheit von Halogenid zu Korrosionserscheinungen an Metallen führen kann - in elektrochemischen Speichervorrichtungen vor allem an der Kathode und der Anode des Speichermoduls.. Darüber hinaus ist dem Fachmann bekannt, dass organische Lösungsmittel durch Inkontaktbringen mit Natriumhydrid oder Natriummetall der Wassergehalt minimiert wird, so dass auf weitere Messungen des Wassergehaltes verzichtet wurde. Ferner sei zur Klarstellung angemerkt, dass alle nachfolgend aufgeführten, allgemeinen oder in Vorzugsbereichen genannten Definitionen und Parameter in beliebigen Kombinationen umfasst sind.

Die vorliegende Erfindung betrifft aber auch besonders bevorzugt korrosionsarme LiPF₆-Lösungen in Acetonitril, dadurch gekennzeichnet, dass zur Entfernung von Halogenid wenigstens Natriumhydrid oder Natriummetall als Additiv, bevorzugt Natriumhydrid, eingesetzt wird.

Die erfindungsgemäße Behandlung erfolgt in der Weise, dass zu einer Lösung von LiPF₆ in Acetonitril Natriumhydrid oder Natriummetall als Additiv zugegeben wird und man das Additiv bevorzugt über einen Zeitraum von einer halben Stunde bis 72 Stunden, besonders bevorzugt von einer Stunde bis 30 Stunden bei einer Temperatur von bevorzugt 10 bis 80°C, besonders bevorzugt von 20 bis 40°C auf die Lösung einwirken lässt. Dieser Verfahrensschritt wird auch als Neutralisation bezeichnet. Danach wird vorhandener ungelöster Feststoff abgetrennt und man erhält die korrosionsarme und halogenidarme Lösung von LiPF₆. Der erfindungsgemäß zweite Schritt ist die Feststoffabtrennung, die bevorzugt mittels Filtration, Sedimentation, Zentrifugation oder Flotation, besonders bevorzugt mittels Filtration, ganz besonders bevorzugt mittels Filtration über einen Filter mit einer mittleren Porenweite von 200 nm oder kleiner, durchgeführt wird.

Die vorliegende Erfindung betrifft daher auch ein Verfahren zur Herstellung korrosionsarmer Lösungen von LiPF₆, dadurch gekennzeichnet, dass man als Neutralisationsschritt auf diese Lösungen von LiPF₆ in Acetonitril wenigstens Natriumhydrid oder Natriummetall als Additiv, bevorzugt Natriumhydrid, einwirken lässt und danach im zweiten Schritt die unlöslichen Komponenten abtrennt.

Die vorliegende Erfindung betrifft bevorzugt ein Verfahren zur Herstellung korrosionsarmer Lösungen von LiPF₆ in Acetonitril, besonders bevorzugt durch Entfernung von Halogeniden, ganz besonders bevorzugt von Fluorid-Ionen, insbesondere bevorzugt von Fluorid-Ionen die als HFgebundenes Fluorid und/oder LiF-gebundenes Fluorid vorliegen. Die vorliegenden Erfindung betrifft aber auch Acetonitril-Lösungen von LiPF₆, dadurch gekennzeichnet, dass man in einem Neutralisationsschritt auf diese Lösungen von LiPF₆ in Acetonitril wenigstens Natriumhydrid oder Natriummetall als Additiv, bevorzugt Natriumhydrid einwirken lässt und danach in einem zweiten Schritt die unlöslichen Komponenten abtrennt. In einer bevorzugten Ausführungsform läßt man während des Neutralisationsschrittes Natriumhydrid oder Natriummetall jeweils als alleiniges Additiv auf die LiPF₆-Lösungen in Acetonitril einwirken. In einer besonders bevorzugten Ausführungsform lässt man während des Neutralisationsschrittes Natriumhydrid als alleiniges Additiv auf die LiPF₆-Lösungen in Acetonitril einwirken.

In einer bevorzugten Ausführungsform wird dem erfindungsgemäßen Verfahren ein Entgasungsverfahren nachgestellt. Bevorzugt zu entfernendes Gas ist Wasserstoff.

In einer bevorzugten Ausführungsform wird das Acetonitril vor dem Einsatz als LiPF₆-Lösungsmittel getrocknet.

Beispielhafte Trockenschritte werden in der WO 02/28500 A1 beschrieben. Bevorzugte dem erfindungsgemäßen Verfahren vorauszuschickende Trocknungsverfahren für das Acetonitril ist wenigstens eines der Reihe
- das Inkontaktbringen des Lösungsmittels mit wenigstens einem Alkalimetallhhydrid unterschiedlich zu NaH oder wenigstens einem Erdalkalimetallhydrid,
- das Inkontaktbringen des Lösungsmittels mit Aluminiumoxid, Siliziumdioxid oder Calciumoxid,
- das Mischen mit einem Lösungsmittel das niedrigsiedende Azeotrope mit Wasser bildet und die sich anschließende destillative Entfernung des Wassers/Lösungsmittelazeotrops gemäß JP 02087473,
- der Einsatz inerter fluorierter Flüssigkeiten, bevorzugt C₈F₁₈ als Schlepper gemäß WO 00/38813 A1,
- das Durchblasen von trockenen Inertgasen gemäß JP 103 38 653,
- das Absorbieren von Wasser an speziell vorbehandeltem Aluminiumoxid oder natürlichen oder synthetischen Aluminiumsilikaten gemäß JP 11 054 378, JP 11 008 163 oder gemäß DE 19 827 63 1,
- das Inkontaktbringen des Lösungsmittels mit aminhaltigen polymerfixierten Reinigungsmitteln gemäß DE 19 827 630 oder
- das Trocknen mit Alkalimetallen gemäß F.P.Dousek et. al. (Chem. Listy (1973), 67 (4) 427-32) oder JP 011 22 566.

Bevorzugt werden als natürliche oder synthetische Aluminiumsilikate Molekularsiebe eingesetzt.

Erfindungsgemäß zur Trocknung bevorzugt einzusetzende Molekularsiebe bestehen aus Zeolithen.

Zeolithe sind kristalline Aluminiumsilikate, die in zahlreichen Modifikationen in der Natur vorkommen, aber auch synthetisch hergestellt werden können. Mehr als 150 verschiedene Zeolithe sind synthetisiert worden, 48 natürlich vorkommende Zeolithe sind bekannt. Die natürlichen Zeolithe werden mineralogisch unter dem Begriff Zeolithgruppe zusammengefasst.

Die Zusammensetzung der Stoffgruppe Zeolithe ist:

Mⁿ⁺ _{x/n} [(AlO₂)⁻ₓ (SiO₂)_{y}]· z H₂O

● Der Faktor n ist die Ladung des Kations M und beträgt bevorzugt 1 oder 2.
● M ist bevorzugt ein Kation eines Alkali- oder Erdalkalimetalls. Diese Kationen werden zum elektrischen Ladungsausgleich der negativ geladenen Aluminium-Tertraeder benötigt und nicht in das Haupt-Gitter des Kristalls eingebaut, sondern halten sich in Hohlräumen des Gitters auf- und sind daher auch leicht innerhalb des Gitters beweglich und auch im Nachhinein austauschbar.
● Der Faktor z gibt an, wie viele Wassermoleküle vom Kristall aufgenommen wurden. Zeolithe können Wasser und andere niedermolekulare Stoffe aufnehmen und beim Erhitzen wieder abgeben, ohne dass ihre Kristallstruktur dabei zerstört wird.
● Das molare Verhältnis von SiO₂ zu AlO₂ bzw. y/x in der Summenformel wird als Modul bezeichnet. Es kann aufgrund der Löwenstein-Regel nicht kleiner als 1 werden.

Erfindungsgemäß bevorzugt als Molekülsieb einzusetzende synthetische Zeolithe sind:

| **Zeolith** | **Zusammensetzung der Elementarzelle** |
|---|---|
| Zeolith A | Na₁₂[(AlO₂)₁₂(SiO₂)₁₂]·27 H₂O |
| Zeolith X | Na₈₆[(AlO₂)₈₆(SiO₂)₁₀₆]·264 H₂O |
| Zeolith Y | Na₅₆[(AlO₂)₈₆(SiO₂)₁₃₆]·250 H₂O |
| Zeolith L | K₉[(AlO₂)₉(SiO₂)₂₇]·22 H₂O |
| Mordenit | Na_{8,7}[(AlO₂)₈₆(SiO₂)_{39,3}]·24 H₂O |
| ZSM 5 | Na_{0,3}H_{3,8}[AlO₂)_{4,1}(SiO₂)_{91,9}] |
| ZSM 11 | Na_{0,1}H_{1,7}[AlO₂)_{1,8}(SiO₂)_{94,2}] |

In einer alternativ bevorzugten Ausführungsform wird der Trocknungsschritt dem erfindungsgemäßen Verfahren nachgestellt oder gleichzeitig mit dem erfindungsgemäßen Verfahren zur Abtrennung von Halogeniden angewandt.

In einer bevorzugten Ausführungsform schließt sich an das erfindungsgemäße Verfahren eine Feststoffabtrennung, bevorzugt mit einem Filter, an, um das oder die Additive zur Abtrennung von Halogeniden und/oder Trocknung und/oder deren unlösliche Reaktionsprodukte aus der erfindungsgemäßen Lösung von LiPF₆ in Acetonitril zu entfernen.

Die erfindungsgemäßen LiPF₆-Lösungen in Acetonitril werden bevorzugt in elektrochemischen Speichervorrichtungen, bevorzugt in Akkumulatoren oder Superkondensatoren, eingesetzt.

Die vorliegende Erfindung betrifft deshalb auch die Verwendung der erfindungsgemäßen LiPF₆-Lösungen in Acetonitril in elektrochemischen Speichervorrichtungen bzw. elektrochemische Speichervorrichtungen enthaltend LiPF₆-Lösungen in Acetonitril, die durch die oben beschriebene Behandlung mit Natriumhydrid oder Natriummetall, bevorzugt mit Natriumhydrid, von Halogenid, bevorzugt von Wasser und Halogenid, befreit wurden.

Die vorliegende Erfindung betrifft aber auch ein Verfahren zur Verbesserung der Langzeitstabilität elektrochemischer Speichervorrichtungen, bevorzugt der zu diesem Zweck einzusetzenden korrosionsarmen LiPF₆-Lösungen in Acetonitril dadurch gekennzeichnet, dass man diese Lösungen einer Neutralisation und einer Feststoffabtrennung unterzieht, wobei die Neutralisation die Zugabe von wenigstens Natriumhydrid oder Natriummetall als Additiv, bevorzugt Natriumhydrid, zu einer Lösung des LiPF₆ in Acetonitril bedeutet und eine anschließende Feststoffabtrennung erfolgt, um das Additiv und/oder sonstige als Feststoff vorliegende Substanzen, bevorzugt nicht umgesetztes Natriumhydrid oder nicht umgesetztes Natriummetall, bevorzugt nicht umgesetztes Natriumhydrid, und Natriumfluorid als Reaktionsprodukt zu entfernen.

Bei allen %-Angaben handelt es sich um Gewichts-%.

Die beschriebenen Beispiele wurden, soweit nicht anders beschrieben, in einer Atmosphäre aus Argon mit einem Gehalt von < 0,1 ppm Wasser und < 0,1 ppm Sauerstoff durchgeführt.

Gemessen wurde die Konzentration des Hexafluorosphosphats und des Fluorids mit einem lonenchromatograph mit folgenden Parametern:

Gerätetyp: Dionex ICS 2100

| | |
|---|---|
| Säule: | IonPac® AS20 2*250-mm "Analytical Column with guard" |
| Probenvolumen: | 1 µl |
| Eluent: | KOH Gradient: 0 min/15 mM, 10 min/15 mM, 13 min/80 mM, 27 min/100 mM, 27.1 min/15 mM, 34 min/15 mM |
| Eluent Fließrate: | 0,25 ml/min |
| Temperatur: | 30°C |
| Self-Regenerating Suppressor: | ASRS® 300 (2-mm) |

### Reduktion des freien Fluoridwertes durch Neutralisation:

### Beispiel 1:

Zu 10 g einer, über einen 200 nm Spritzenfilter filtrierten Lösung von 14,8 % LiPF₆ in über Molekularsieb getrocknetem Acetonitril mit einem freien Fluorid-Gehalt von 0,97 % wurden 150 mg Natriumhydrid gegeben. Nach ca. 15 Stunden wurde eine Probe der Lösung entnommen, über einen Spritzenfilter mit einer Porenweite von 200 nm filtriert und analysiert. Der Gehalt der Lösung an Fluorid lag unter der Erfassungsrenze von 2 ppm.

## Patentansprüche

1. LiPF₆-Lösungen erhältlich durch Behandlung einer nichtwässrigen, halogenidhaltigen LiPF₆-Lösung mit wenigstens Natriumhydrid oder Natriummetall als Additiv, wobei das LiPF₆ in gelöst ist.

2. LiPF₆-Lösungen gemäß Anspruch 1, **dadurch gekennzeichnet, dass** Natriumhydrid oder Natriummetall jeweils als alleiniges Additiv eingesetzt wird.

3. LiPF₆-Lösungen gemäß Anspruch 1 oder 2, **dadurch gekennzeichnet, dass** das Acetonitril vor dem Einsatz als LiPF₆-Lösungsmittel getrocknet wurde.

4. LiPF₆-Lösungen gemäß Anspruch 3, **dadurch gekennzeichnet, dass** als Trocknungsverfahren wenigstens eines der Reihe
- das Inkontaktbringen des Lösungsmittels mit wenigstens einem Alkalimetallhhydrid unterschiedlich zu NaH oder wenigstens einem Erdalkalimetallhydrid,
- das Inkontaktbringen des Lösungsmittels mit Aluminiumoxid, Siliziumdioxid oder Calciumoxid,
- das Mischen mit einem Lösungsmittel das niedrigsiedende Azeotrope mit Wasser bildet und die sich anschließende destillative Entfernung des Wassers/Lösungsmittelazeotrops,
- der Einsatz inerter fluorierter Flüssigkeiten, bevorzugt C₈F₁₈ als Schlepper,
- das Durchblasen von trockenen Inertgasen,
- das Absorbieren von Wasser an speziell vorbehandeltem Aluminiumoxid oder natürlichen oder synthetischen Aluminiumsilikaten,
- das Inkontaktbringen des Lösungsmittels mit aminhaltigen polymerfixierten Reinigungsmitteln oder
- das Trocknen mit Alkalimetallen durchgeführt wird.

5. LiPF₆-Lösungen gemäß Anspruch 4, **dadurch gekennzeichnet, dass** als natürliche oder synthetische Aluminiumsilikate Molekularsiebe eingesetzt werden.

6. LiPF₆-Lösungen gemäß einem der Ansprüche 1 bis 4, **dadurch gekennzeichnet, dass** Natriumhydrid als alleiniges Additiv eingesetzt wird.

7. Verfahren zur Herstellung korrosionsarmer Lösungen von LiPF₆, **dadurch gekennzeichnet, dass** man als Neutralisationsschritt auf diese Lösungen von LiPF₆ wenigstens Natriumhydrid oder Natriummetall als Additiv, bevorzugt Natriumhydrid, einwirken lässt und danach in einem zweiten Schritt die unlöslichen Komponenten abtrennt, wobei das LiPF₆ in Acetonitril gelöst ist.

8. Verfahren gemäß Anspruch 7, **dadurch gekennzeichnet, dass** dieses zur Entfernung von Halogeniden, bevorzugt von Fluorid-Ionen, eingesetzt wird.

9. Verfahren gemäß der Ansprüche 7 oder 8, **dadurch gekennzeichnet, dass** das Acetonitril zuvor getrocknet wurde und als Trocknungsverfahren wenigstens eines der Reihe
- das Inkontaktbringen des Lösungsmittels mit wenigstens einem Alkalimetallhhydrid unterschiedlich zu NaH oder wenigstens einem Erdalkalimetallhydrid,,
- das Inkontaktbringen des Lösungsmittels mit Aluminiumoxid, Siliziumdioxid oder Calciumoxid,
- das Mischen mit einem Lösungsmittel das niedrigsiedende Azeotrope mit Wasser bildet und die sich anschließende destillative Entfernung des Wassers/Lösungsmittelazeotrops,
- der Einsatz inerter fluorierter Flüssigkeiten, bevorzugt C₈F₁₈ als Schlepper,
- das Durchblasen von trockenen Inertgasen,
- das Absorbieren von Wasser an speziell vorbehandeltem Aluminiumoxid oder natürlichen oder synthetischen Aluminiumsilikaten,
- das Inkontaktbringen des Lösungsmittels mit aminhaltigen polymerfixierten Reinigungsmitteln oder
- das Trocknen mit Alkalimetallen
durchgeführt wird.

10. Verwendung von wenigstens Natriumhydrid oder Natriummetall als Additiv, bevorzugt Natriumhydrid, zur Herstellung nicht-korrosiver Lösungen von LiPF₆, wobei dieses in Acetonitril gelöst ist.

11. Verwendung gemäß Anspruch 10, **dadurch gekennzeichnet, dass** die nicht-korrosiven LiPF₆-Lösungen in Acetonitril in elektrochemischen Speichervorrichtungen eingesetzt werden.

12. Verfahren zur Verringerung der Korrosivität der Lösungen in elektrochemischen Speichervorrichtungen, bevorzugt der zu diesem Zweck einzusetzenden LiPF₆-Lösungen, **dadurch gekennzeichnet, dass** man diese Lösungen einer Neutralisation und einer Feststoffabtrennung unterzieht, wobei die Neutralisation die Zugabe von wenigstens Natriumhydrid oder Natriummetall als Additiv, bevorzugt Natriumhydrid, zu einer Lösung des LiPF₆ in Acetonitril bedeutet und die anschließende Feststoffabtrennung mittels Filtration, Sedimentation, Zentrifugation oder Flotation, bevorzugt mittels Filtration, erfolgt, um das Additiv und/oder sonstige als Feststoff vorliegende Substanzen, bevorzugt Natriumfluorid und überschüssiges Natriumhydrid oder Natriummetall zu entfernen.
